# EUROPEAN PATENT SPECIFICATION

(11) **EP 4 254 124 B1**
(45) Date of publication and mention of the grant of the patent: **27.11.2024**
(21) Application number: 22164904.9
(22) Date of filing: 29.03.2022
(51) Int. Cl.: G05D 1/00, A63B 43/00, A63B 59/00, A63B 60/00, A63B 67/00

(54) **OPERATING A DRONE NAVIGATING WITHIN AN ARENA**
BETRIEB EINER INNERHALB EINER ARENA NAVIGIERENDEN DROHNE
FONCTIONNEMENT D'UN DRONE NAVIGANT À L'INTÉRIEUR D'UNE ARÈNE

(43) Date of publication of application: 04.10.2023
(73) Proprietor: Stern, Isaac Alfred, 1203 Genève (CH); Oliveira Paredes, Stéphane, 1203 Genève (CH); Pothula, Anuraag Vijay Kumar, 1219 Châtelaine (CH)
(72) Inventor: Stern, Isaac Alfred, 1203 Genève (CH); Oliveira Paredes, Stéphane, 1203 Genève (CH); Pothula, Anuraag Vijay Kumar, 1219 Châtelaine (CH)

(56) References cited:
- WO-A1-2021/067536
- US-A1- 2013 102 419
- US-A1- 2014 357 149

## Description

### Technical Arena

The present invention relates to a method, preferably a computer implemented method, for operating a drone navigating within an arena delimited by boundaries.

The present invention further relates to a system comprising a drone configured for navigating in an arena delimited by boundaries and a batting instrument configured for hitting the drone to induce a new trajectory to the drone.

### Background of the art

Unmanned aerial vehicles (UAVs) or drones have become increasingly popular in recent times. These drones can be controlled manually by the user or can fly autonomously according to a pre-programmed flight path. Because of these features, drones can be used in a variety of situations from work to recreation. For example, drones may be used to deliver objects from a warehouse to a purchaser's residence. Drones may also be flown for fun, such as in parks or backyards.

The existing drones are generally programmed for obstacle avoidance while flying to prevent any impact with an object. To that end, the trajectory of the drone is calculated and updated on a regular basis to bypass any potential obstacle placed on the trajectory.

Additionally, some existing drones are equipped with physical protections such as bumpers that are designed to sustain physical impacts with solid objects. However, these drones react passively when they impact an object. In other words, they just bounce off the solid object without any additional information being generated by the computer systems.

Therefore, when it comes to application where an impact between a drone and an object is needed, for instance in a game, the existing drones fail to provide satisfying results because they are not configured for impact.

An example of a virtual reality sport simulation could be found in US 2013/102419.

### Summary of the invention

The above problems are solved by the device and the method according to present invention.

The invention concerns a method, preferably a computer implemented method, for operating a drone navigating within an arena delimited by boundaries, the navigation of the drone in the arena being ruled by a navigation program setting the navigation parameters of the drone to ensure the drone follows a calculated trajectory,
the method comprising a step of setting the navigation program to adapt the navigation parameters of the drone to an impact between the drone and an object placed in the arena,
the method being characterized in that the setting of the navigation parameters of the drone in the navigation program depends on the object impacting the drone,
the setting step comprising
implementing a virtual impact setup in the navigation program for adjusting the navigation parameters of the drone to an impact between the drone and a virtual object, and
implementing a real impact setup in the navigation program for adjusting the navigation parameters of the drone to an impact between the drone and a physical object.

In another aspect, the invention concerns a computer program comprising instructions which, when the program is executed by a computer, cause the computer to carry out the method according to the present invention.

In another aspect, the invention relates to a computer system, for instance a computer processing unit, comprising means for carrying out the method of according to the present invention.

In another aspect, the invention relates to a system comprising a drone configured for navigating in an arena delimited by boundaries and a batting instrument configured for hitting the drone, the navigation of the drone in the arena being ruled by the navigation parameters of the drone to ensure the drone follows a calculated trajectory,
characterized in that the system further comprising
a computer system configured for setting the navigation parameters of the drone when an impact occurs between the drone and an object placed in the arena,
the computer system being configured for setting of the navigation parameters of the drone according to a determined setup depending on the object impacting the drone,
the determined setup being chosen among
a virtual impact setup to adjust the navigation parameters of the drone to an impact between the drone and a virtual object, and
a real impact setup to adjust the navigation parameters of the drone to an impact between the drone and a physical object,
said real impact setup comprising a batting instrument setup to adjust the navigation parameters of the drone to an impact between the drone and the batting instrument.

In another aspect, the invention relates to a batting instrument configured for hitting a drone to induce a new trajectory to the drone. Preferably the invention related to a batting instrument configured for being used in a system according to the present invention.

In another aspect, the invention relates to a drone configured for being hit by a batting instrument to induce a new trajectory to the drone. Preferably the invention related to a drone configured for being used in a system according to the present invention.

### Description of the invention

Overall, the present invention concerns a new category of active gaming that allows players to physically interact with a flying ball. The ball is preferably composed of a drone and a protective cage built around the drone. From here on, when using 'drone' or 'ball' we refer to the combined drone and cage. The drone flies within an arena named geofenced area that constitutes the playing arena, or arena.

In a preferred embodiment, the invention relates to a game that is played using a physical flying ball, with players wielding physical bats inside an arena.

The arena or field can be a space, indoors or outdoors. The limits or boundaries of the arena, that is to say its walls, floor, and ceiling for instance, can be physical boundaries or virtual boundaries or a combination of both. They are preferably virtual surfaces defined by a set of coordinates in space. The drone is programmed to react when it flies into a boundary as though it is bouncing off a physical object.

Preferably, the present invention is used, for instance a game is played, without the need for the users or players to see the boundaries of the arena. For instance, the players can visualize the virtual walls of the arena simply by observing the behavior of the drone as it bounces off of them.

Preferably, players strike the drone with a batting accessory to change the direction of its flight. We will refer to the batting accessories as bats.

Preferably, in the present invention, the drone is used as a ball and there is a need that the drone mimics the behavior of a ball when colliding with an object, either virtual or physical object.

In a first aspect, the present invention concerns a method, preferably a computer implemented method, for operating a drone navigating within an arena delimited by boundaries, the navigation of the drone in the arena being ruled by a navigation program setting the navigation parameters of the drone to ensure the drone follows a calculated trajectory,
the method comprising a step of setting the navigation program to adapt the navigation parameters of the drone to an impact between the drone and an object placed in the arena,
the method being characterized in that the setting of the navigation parameters of the drone in the navigation program depends on the object impacting the drone,
the setting step comprising
implementing a virtual impact setup in the navigation program for adjusting the navigation parameters of the drone to an impact between the drone and a virtual object, and
implementing a real impact setup in the navigation program for adjusting the navigation parameters of the drone to an impact between the drone and a physical object.

The navigation of the drone in the arena is ruled or controlled by navigation parameters to ensure the drone follows a calculated trajectory within the arena. The boundaries can be walls, either virtual wall or physical wall, or both.

The navigation parameters of the drone relate to all the parameters that shall be taken into account to define the motion or displacement or flight of the drone in the arena. For instance the navigation parameters comprises the orientation of the drone, the speed of the drone, the acceleration or deceleration of the drone.

During the flight of the drone in the present invention, the drone can be hit or be hit by objects, either virtual object or physical object. The aim of the present invention is to set or adapt the navigation parameters of the drone depending on the object impacting the drone during the flight. In this respect, the present invention offers at least two setups to adapt the navigation parameters of the drone depending on the object. The adjustment of the navigation parameter, namely the implementation of the setup, can be done after an impact or before an impact between an object and the drone.

In a virtual impact set up, the goal is to adapt the navigation parameters of the drone to an impact with a virtual object. In a real impact setup, the goal is to adapt the navigation parameters of the drone to an impact with a physical object (real object). Therefore, the present invention allows to adapt the navigation parameters of the drone depending on the type of or kind of object impacting or likely to impact the drone. The overall goal is to have the drone mimicking the behavior of a ball, notably the rebound of a ball to mimic a ball bouncing off a wall, the wall being a physical object or a virtual object.

Advantageously, the present invention allows to configure the navigation program of the drone to simulate or mimic an impact between the drone and an object, either virtual or physical. The point is to compute a calculated trajectory which mimics an impact with an object. In other words, the impact is processed as an instruction to calculate a trajectory of the drone which takes into account or considers the impact. This is not possible with the existing navigation system for drones which are configured for having the drone crossing a series of points defining a trajectory in a sequential manner without simulating an impact. On the contrary, the existing drone are configured for avoiding obstacle whereas in the present invention the point is to take into account an obstacle as a new instruction to calculate a trajectory mimicking an impact with the obstacle. And for the very fey existing drones that comprises protection to protect them when they hit a real object, these drones react passively when they impact an object, and do not generate a new trajectory instruction based on the position and direction of the impact.

Preferably, the virtual impact setup comprises the steps of
determining the position of said virtual object placed in the arena;
calculating a trajectory set comprising several trajectories of the drone within the arena based on the position of the drone relative to the position of said virtual object;
displacing the drone in the arena to follow any one of the trajectories of the trajectory set;

Sets of predetermined trajectories are calculated similar to the way a computer game calculates predetermined behaviors of virtual objects in a virtual space. Preferably, these trajectory sets are based on the current position, trajectory, and speed of the ball within the arena and relative to any virtual objects therein.

Preferably, virtual impact setup comprises the steps of
- calculating a waypoint target as the point where the trajectory of the drone crosses the position of a virtual object;
- adapting the navigation parameters of the drone progressively while the drone is approaching the waypoint target to stop the drone at the waypoint target and fly away from the virtual object at the waypoint;

For instance, a waypoint target is calculated as the point where the current trajectory of the drone intersects the surface or the ground or a virtual wall of a virtual arena or another virtual object in the arena. Preferably, just before the drone reaches a waypoint it changes its orientation and increases thrust to come to a stop at the waypoint and fly away from the virtual object. It does this to mimic a ball bouncing off a wall and for instance to give the impression that it has bounced off the invisible walls of the arena.

Preferably, the real impact setup comprises the steps of
- stabilizing the drone after the impact with the physical object;
- computing a new trajectory defined by the direction of an impact vector of the physical object;
- adapting the navigation parameters of the drone to stabilize the drone into the new trajectory so that the drone is displaced along said new trajectory;

In the real mode, the object is a physical object. For instance, when a player strikes the drone, the physical impact disrupts the flight of the drone. The drone must stabilise its flight, but instead of stabilising its flight to continue its previous trajectory the drone must stabilise into the new trajectory defined by the direction of the impact vector. The impact vector depends on on the position where the drone is struck, the angle of the impact, and the intensity of the impact.

The real mode setup or mode must simultaneously re-establish stable flight and make course corrections to start flying smoothly on the new trajectory as quickly as possible.

Implementing the real impact mode or setup gives the illusion that the physical impact on the drone, by for example a bating accessory, has conveyed sufficient physical momentum to the ball for it to travel on its new trajectory like a baseball struck by a baseball bat. If an impact were to actually transmit enough momentum to make the drone travel more than a few meters, the impact energy would exceed the physical resistance of the cage and destroy the drone.

The cage, drone, and batting accessories are designed to minimize and dissipate impact energy so as to protect the drone. This in turn limits the amount of physical momentum that can be transferred to the ball (drone + cage), and the ball would only travel a short distance. By implementing the real impact mode, the drone uses its propulsion system to continue along the full length of the computed trajectory regardless of the intensity of the impact.

In a preferred embodiment, the setting step comprises implementing a hybrid impact setup in the navigation program for adjusting the navigation parameters of the drone when the object impacting the drone is a physical object whose position is predetermined, the hybrid mode comprising the step of
calculating a hybrid way point target as the point where the trajectory of the drone crosses the position of the physical object;
calculating a pre impact orientation and a post impact orientation of the drone depending on the physical forces exerted on the drone upon impact with the physical object, so that upon impact with the physical object the physical forces exerted on the drone will rotate the drone from the pre impact orientation into a post impact orientation;
adapting the navigation parameters of the drone progressively while the drone is approaching the hybrid waypoint target to position the drone into the pre impact orientation;

For instance, the hybrid impact setup is relevant when the object hitting the drone is both a virtual and a physical object. For instance a virtual floor or a virtual wall of the arena corresponds to the physical floor of the playing space where the game takes place. In this scenario when the drone hits the floor, there is both a physical impact and a virtual one. This gives rise to a hybrid waypoint. When approaching a hybrid waypoint the navigation parameters of the drone must be set or adapted. For instance, the drone will change orientation and slow down to reduce its impact speed and ensure the impact does not cause damage to the drone. Just before impact the drone will also adjust its pre-impact orientation such that the physical forces of the impact will rotate the drone into an optimal post-impact orientation. This will allow the drone to fly away from the waypoint with minimum instability after impact and give the most fluid rebound effect.

When Hybrid waypoints are used the system can be configured to either ignore the impact vector generated by the physical shock and continue on to the next pre-calculated waypoint, or integrate the impact vector to determine the next waypoint. Both options have advantages for certain game modes. Hybrid waypoints can also be used in any scenario where the drone is impacting a physical surface known to the system. For example, when playing indoors hybrid waypoints can be used on the walls and ceiling of the indoor space.

In other words, the sensors on the drone detect the physical forces generated by the physical impact. This information can be used to generate an impact vector like in the real mode. Depending on the type of game being played it may be desirable to ignore this information and have the drone continue along the predictable pre-calculated trajectory like it would after a purely virtual impact.

It can also be desirable to use the information from the impact vector to generate a new trajectory set. If the physical surface the drone is impacting is uneven, then the new trajectory generated from the impact vector can be significantly different to the pre-calculated trajectory from the virtual impact. From the players perspective this would make it hard to predict the next trajectory after impact. In some game modes this uncertainty can be desirable.

Advantageously, when implementing the virtual impact mode, the increased thrust required to stop the drone midair and make the sudden change in trajectory uses a significant amount of the energy stored in the drone's battery. By implementing the hybrid impact mode, the drone only needs to reduce its speed sufficiently to avoid a destructive physical impact. Then, as the drone impacts the physical surface it is brought to a stop and part of the drone's kinetic energy is momentarily stored in the elastic deformation of the drone cage. This energy helps the drone move away onto its new trajectory and reduces the amount of energy required from the battery.

Preferably, the setting step comprises implementing the virtual impact setup after each impact between the drone and a physical object. This allows to update the set of trajectories calculated for virtual impact setup depending on the impact of the drone with a physical object. If the drone impacts a physical object for example when it is struck by a player's bat, there is a need to modify or update the set of trajectories that were calculated before the impact of the drone with the physical object. A new set of trajectories are calculating, preferably with corresponding virtual and or hybrid waypoints.

Preferably, the virtual objects are chosen among virtual boundaries of the arena, virtual drones, virtual obstacles, and computer-generated virtual opponents.

Preferably, the physical objects are chosen among physical boundaries of the arena such as wall, drones, batting accessories configured for striking a drone, the players (i.e. users) themselves, and physical obstacles placed in the arena.

The invention further relates to a system comprising a drone configured for navigating in an arena delimited by boundaries and a batting instrument configured for hitting the drone, the navigation of the drone in the arena being ruled by the navigation parameters of the drone to ensure the drone follows a calculated trajectory,
characterized in that the system further comprising
a computer system configured for setting the navigation parameters of the drone when an impact occurs between the drone and an object placed in the arena,
the computer system being configured for setting of the navigation parameters of the drone according to a determined setup depending on the object impacting the drone,
the determined setup being chosen among
a virtual impact setup to adjust the navigation parameters of the drone to an impact between the drone and a virtual object, and
a real impact setup to adjust the navigation parameters of the drone to an impact between the drone and a physical object,
said real impact setup comprising a batting instrument setup to adjust the navigation parameters of the drone to an impact between the drone and the batting instrument.

The particular advantages of the system are similar to the ones of the method of the invention and will thus not be repeated here.

In an aspect of the present invention, the invention concerns a drone mounted in a cage to protect the drone upon impact with the physical object or with the batting accessory. The drone is preferably a multirotor unmanned aerial system (UAS).

In a preferred embodiment, an inner frame carries the motors, electronics and battery. The frame maintains all the components of the drone together.

Preferably, in an example the arms of the drone (for instance four) can have a modular length to accept greater impacts without deteriorating the propellers. It will also maintain the propellers at two different levels.

Preferably, the inner frame of the drone is configured to deform reversibly on impact, to dissipate at least some of the impact energy and reduce the chance of deteriorating the drone.

For instance a plurality of onboard computer systems and electronics control the autonomous flight and the behavior of the drone during the displacement. Onboard sensors such as (but not limited to) the accelerometer, magnetometer, and gyroscope are used to detect the drone's interaction with the objects, either virtual or physical, such as players or other as physical shocks.

Preferably, an external cage protects the inner frame from impacts, and the players from the spinning propellers of the drone. The frame has attaching points to the cage. The cage's main goal is to protect the frame, the propellers and the electronics that reside inside of it from any impact. It is preferably made out of lightweight and resistant material such as ABS plastic. It is preferably composed of multiple smaller replaceable parts. It also preferably has some freedom in rotation with the frame (semi-gyroscopic) to allow more stable impacts on the ground.

Preferably drone is covered in a plurality of light sources to allow for visual displays in low light environments.

Preferably, the drone comprises motor controllers such as electronic speed controllers that are going to convert the signal from the CPU into the signals to control the motors. Motors are for instance brushless motors.

In a preferred embodiment, the computer system comprises a computer processing unit CPU or processor to run the processes or calculations. Preferably, the rotors control, wireless communications, 3D positioning, LED control processes will be scheduled in this processors' threads.

The CPU preferably has command over the navigation and positioning components. Thus it will determine the position, detect collisions and calculate the future trajectories with the inputs of navigation component and positioning components. Then the CPU can send control signals to the motor controllers so that the drone can adapt its trajectory.

The drone is preferably equipped with a positioning system to allow it to determine its position within the arena. For instance, the positioning system comprises antennas to communicate/measure the distances and angles needed to triangulate or trilaterate the drone's position in the arena. When the drone reaches the arena's boundary, the CPU will use the positioning values and determine the change of course that will be sent to the motor controllers.

The navigation component for instance comprises the sensors needed to get the drone's yaw, roll and pitch. These values are preferably sent to the CPU, which will compute and check if the drone is in the correct course and detect when collisions occur.

Preferably, the drone further comprises a motion module controlling the displacement of the drone in the arena, the computer system is configured for commanding the motion module and setting the navigation parameters of the drone depending on the operating mode, preferably depending on the impact setup.

Preferably, the motion module comprises several units involved in the control of the flight behaviour of the drone. For instance, the motion module comprises some components chosen from the list comprising the motor, the motor controllers, the navigation component, the positioning component.

In another aspect of the present invention, the invention relates to batting accessory or bat comprises a flexible portion configured for being deformable in a reversible manner upon impact with the drone.

Preferably, the bat is flexible or comprises a flexible portion. Preferably, the rigidity and weight of the bat is calibrated to allow a player to strike the drone at full force without damaging it. To achieve this the bats flex and absorb a significant proportion of the impact energy. The batting accessories or bat can be made in any other form so long as the impact energy delivered to the drone remains non-destructive.

Preferably, the handle that the players use to grasp the bat also serves to house the batteries and the electronic components of the bat.

Preferably, a flexible inner core, or a semi flexible core, protrudes from the handle. Light sources can be mounted on the inner core and can be used to illuminate the bat in different colours and with different lighting effects.

Preferably, the inner core is protected with a transparent or translucent outer shell that serves to protect the inner core and the light sources and spread the impact energy over a wider surface area. The outer shell could also serve to diffuse the light from the light sources.

Preferably, the batting accessory comprises an electronic module configured for track the movements of the batting accessory. The electronic module comprises electronics components including but not limited to wireless communication components, processors, accelerometers and other sensors, and haptic feedback motors. These components are used for tasks such as but not limited to gesture recognition, communicating wirelessly with the drone, and controlling the lighting effects on the bats.

The electronic module allows to track the movements of the batting accessory such that when the player makes specific gestures the batting accessory activates predetermined complex behaviors of the drone. In other words, it means the bats use motion tracking for special features.

Preferably, the present invention allows for the use of other accessories for controlling the drone (i.e. the ball) such as but not limited to gesture control gloves. For instance a layer of augmented reality will be added with AR goggles or other augmented reality viewing devices. When an augmented reality device, for example a mobile phone, is used to visualize the virtual objects of the game, the virtual impact method gives the illusion that the drone is physically bouncing off of the virtual objects.

Preferably, the present invention comprises game sound effects and noise cancellation. The game generates 3D soundscapes with sound effects corresponding to players inputs and the drone's physical and virtual interactions or impacts. For example, when the drone bounces off the virtual arena walls, a bounce sound can be generated. A player wearing headphones will hear the sound as though it is emanating from the position of the virtual impact. In some cases, for instance for some game modes, it may be desirable to hide the noise of the drone's motors. The player's headphones can do this using noise cancellation. Thus the noise from the motors can be masked and when desired alternative sounds can be played as the ball accelerates.

As used herein, the word "means" (singular or plural) preceded or followed by a function can be replaced by the word "unit" or " module". For instance "computation means" can be replaced by "computation module" or "computation unit".

The embodiments describe for the device The embodiments describe for the device also apply to the methods according to the present invention mutatis mutandis.

### Brief description of the drawings

Further particular advantages and features of the invention will become more apparent from the following non-limitative description of at least one embodiment of the invention which will refer to the accompanying figures, wherein
- Figure 1 represents two players or users playing with a drone/a ball;
- Figures 2 to 4 represent a drone mounted in a cage according to the present invention;
- Figures 5 and 6 represent a system according to the present invention comprising a ball and a bat;
- Figures 7 represents a drone according to the present invention flying in an arena;
- Figure 8 represents a system comprising a drone and a bat, the drone flying in the arena and being hit by the bat;

### Detailed description of the invention

The present detailed description is intended to illustrate the invention in a non-limitative manner since any feature of an embodiment may be combined with any other feature of a different embodiment in an advantageous manner.

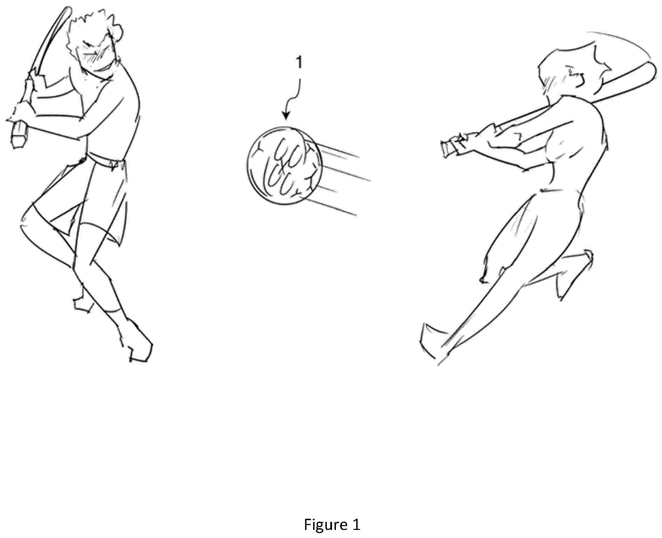

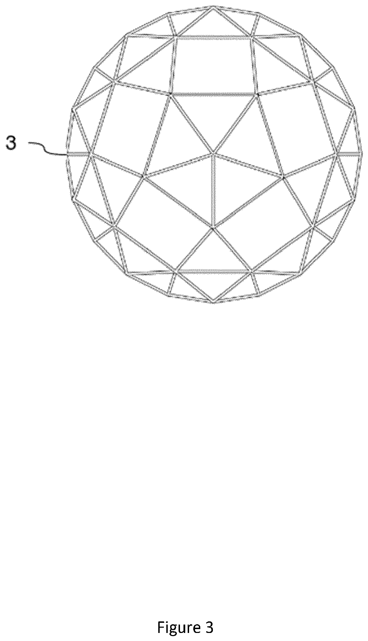

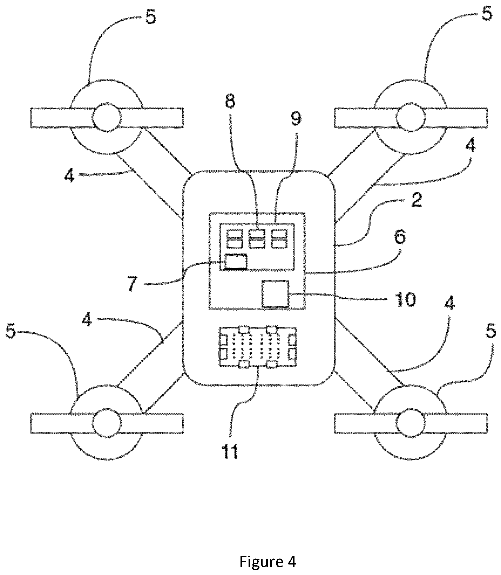

In the example illustrated on figures 1 to 8, the present invention is used in a game where the drone is used as a ball. This is an example of active gaming that allows players to physically interact with a flying ball. The ball is composed of a drone and a protective cage built around the drone.

The drone flies within a geofenced area that constitutes the playing field, or arena. Players strike the drone with a batting accessory to change the direction of its flight. We will refer to the batting accessories as bats.

The present example relates to an active gaming that allows players to physically interact with a flying ball. The ball is composed of a drone and a protective cage built around the drone. From here on, when using 'drone' or 'ball' we refer to the combined drone and cage. The drone flies within a geofenced area that constitutes the playing field, or arena. Players strike the drone with semi rigid batting accessories to change the direction of its flight. We will refer to the batting accessories as bats.

In a typical gameplay scenario, players would go into a physical space such as a sports field and place the drone on the ground. They would then define the position and the physical limits of the arena around them, select the number of players, and choose the game mode they wish to play, for instance by using a software (not described herein).

The ball would then take off and hover until struck with a bat or until struck with a virtual wall. Once struck the ball will fly until it is struck again, or it bounces off either a physical object such as the ground or a player, or it bounces off a virtual object such as the arena wall.

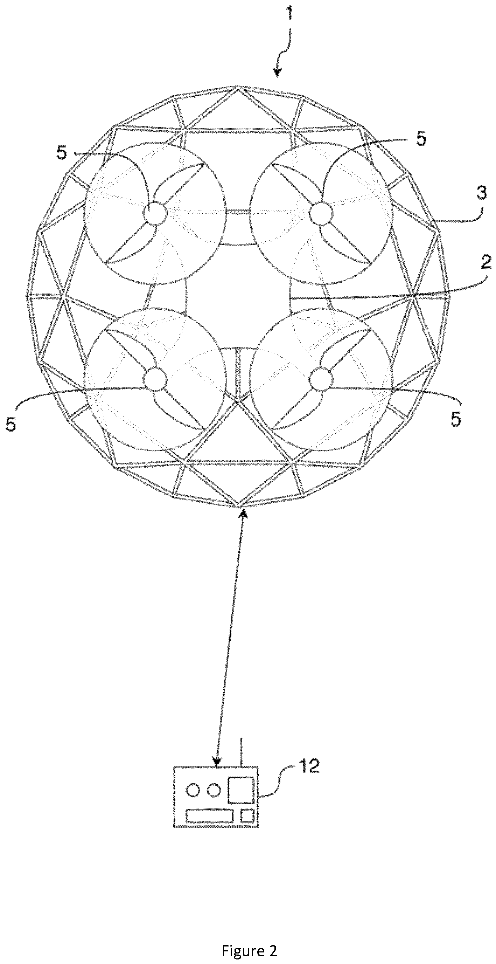

An example of drone 1 or ball is represented in figures 2 to 4.

The drone 1 is a multirotor unmanned aerial system (UAS). The drone comprises an inner frame 2 which carries the motors, electronics and battery. The frame 2 comprises four arms each equipped with a propeller 5.

An external cage 3 protects the inner frame 2 from impacts, and the players from the spinning propellers 5 of the drone 1. In this example, the cage 3 is made out ABS plastic. It is composed of multiple smaller replaceable parts. It also has some freedom in rotation with the frame (semi-gyroscopic) to allow more stable impacts on the ground.

A plurality of onboard computer systems and electronics - hereafter computer system 6 - control the autonomous flight and the behaviour of the drone during gameplay. Onboard computer systems 7 comprises on board sensors 9 the accelerometer, magnetometer, and gyroscope are used to detect the drone's interaction with the players and the environment such as physical shocks.

The onboard computer systems 7 further comprises a positioning system 8 to allow it to determine its position within the arena and navigation component 9. The computer system further comprises a motor controllers 11 to control the motors of the propellers 5.

All the processes will be running on a Computer Processing Unit CPU, namely a processor 10. The rotors control, wireless communications, 3D positioning, LED control processes will be scheduled in this processors' threads. It has command over the navigation and positioning components. Thus, it will determine the position, detect collisions and calculate the future trajectories with the inputs of (104) and (105). Then the CPU will send four control signals to the motor controllers so that the drone can adapt its trajectory.

The drone 1 is connected to a computing device 12, for instance a smartphone, a game accessory, a game controller. For instance, the game controller is an application (for example running on a mobile phone or laptop). It is the main link between the users and the drone 1 itself. Any high level commands like choosing a game, adding players, starting and stopping a match, resetting the score and emergency stops will be preferably sent through the computing device.

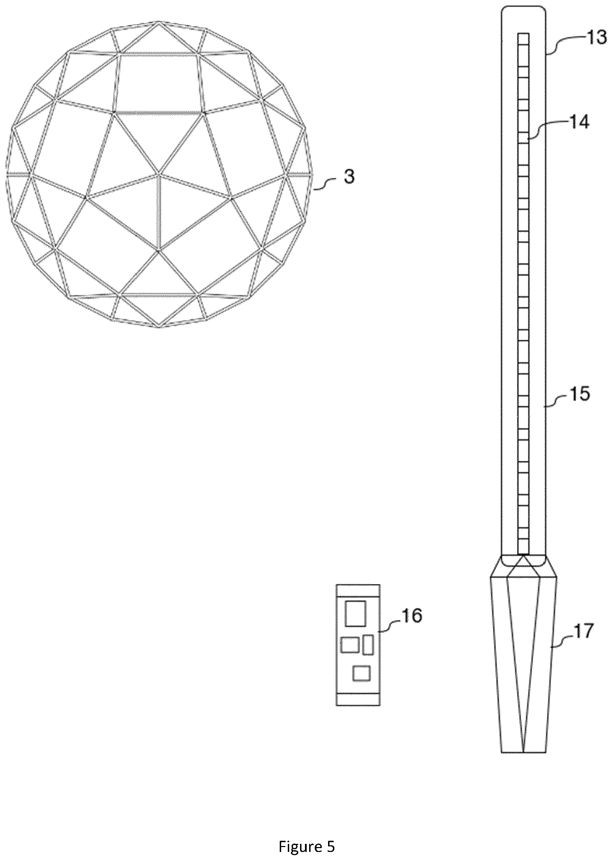

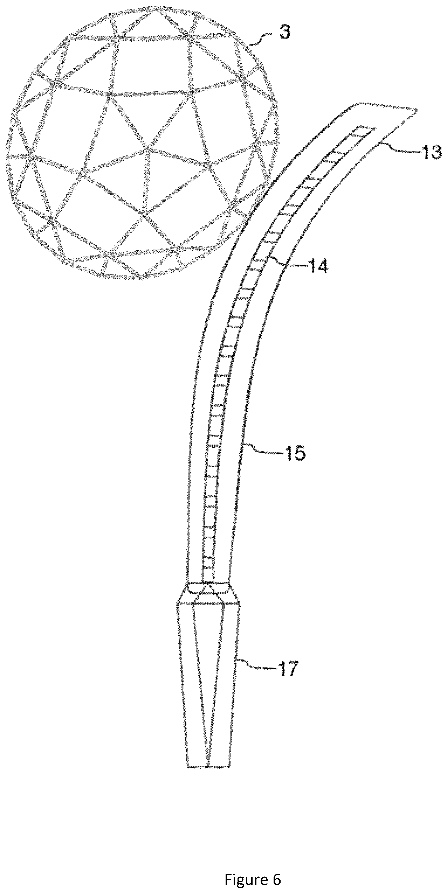

Figure 5 represents the drone 1 and a bat before impact while figure 6 represents the bat 13 during a physical impact with the drone 1.

The bat 13 comprises a flexible inner core 14 embedded in a transparent outer shell 15. The bat 13 further comprise an electronic module 16 with electronic components mounted in the bat 13.

The user grasps the bat 13 by holding the bat handle 17 placed at one end of the bat 13. The handle 17 that the players use to grasp the bat 13 also serves to house the batteries and the electronic module 16 of the bat 13.

As shown in figure 6, when the drone 1 hit the bat 13, it induces a reversible deformation of the bat via the flexible inner core 14. The bats flex and absorb a significant proportion of the impact energy see.

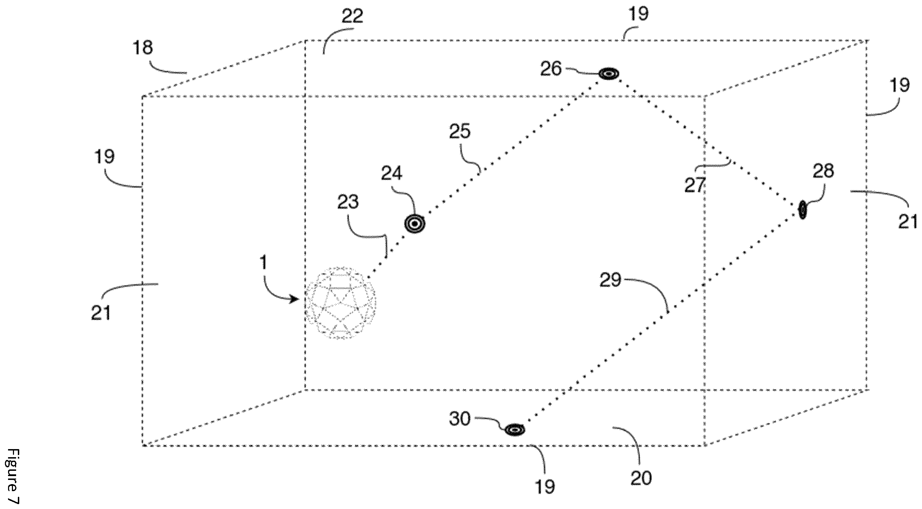

Figure 7 represents a first game situation where the drone 1 flies in an arena 18. The arena 18 is 3 D space, namely a volume, delimited by boundaries 19. The boundaries 19 comprises a physical floor 20, namely the ground floor, whereas the other boundaries of the volume are virtual boundaries, such as the side walls 21 and the ceiling 22.

In this game situation, the navigation program comprises virtual setup corresponding to virtual impact on the virtual boundaries, i.e. the side walls 21 and the ceiling 22. The navigation program also comprises hybrid set up corresponding to impact on the ground floor 20.

The drone 1 navigates along a first trajectory 23 to reach a first waypoint 24, the waypoint 24 (i.e. virtual waypoint) corresponding to a virtual impact with the sidewall 21. After a bounce or rebound on the sidewall 21, the drone flies along a second trajectory 25 toward a second waypoint 26 placed on the ceiling 22. The drone 1 bounces on the ceiling 22 at the waypoint 26 and flies along a third trajectory 27 to reach a third waypoint 28 on the sidewall 21. Then, after a rebound on the side wall at the third waypoint, the drone 1 flies toward a hybrid waypoint 29 along a fourth trajectory 30 placed on the floor 19.

In this game situation, the drone 1 calculates all the trajectories (set of trajectories) in dedicated navigation program and adjusts the navigation parameters of the drone 1 to mimics the rebounds at each way points.

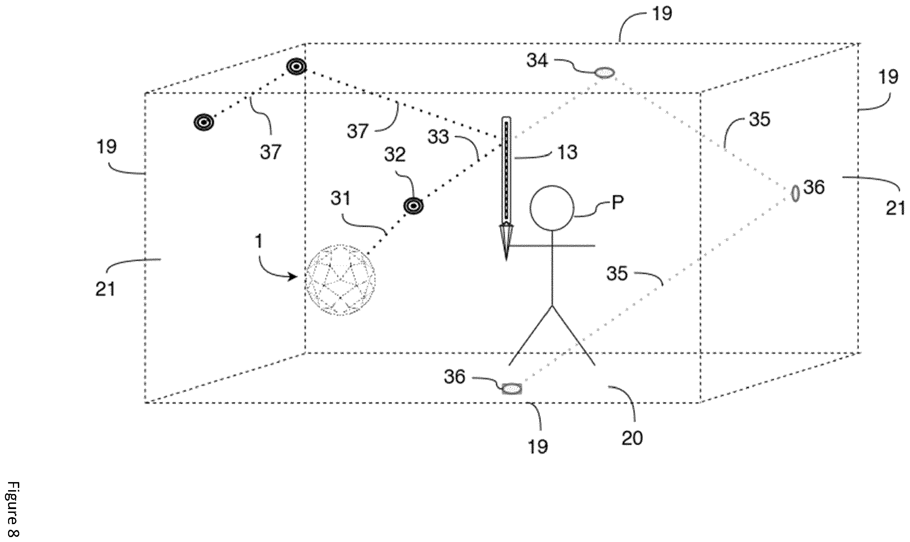

Figure 8 represents a second game situation where the drone flies in the same arena than the first game situation. Contrary to the first game situation represented in figure 7, this second game situation comprises a player P handling a bat 13.

The drone 1 navigates along a first trajectory 31 to reach a first waypoint 31, the waypoint 31 (i.e. virtual waypoint) corresponding to a virtual impact with the sidewall 21. After a bounce or rebound on the sidewall 21, the drone flies along a target trajectory 33 toward a target waypoint 34 placed on the ceiling 22. However, the drone will not reach this target waypoint 34 : the target trajectory 33 is disrupted by the user striking the drone 1. The physical impact of the bat changes the navigation program that initially comprised an initial set of trajectories 35 to reach the subsequent initial virtual waypoints 36 on the side wall 21 and on the ground 22.

The drone 1 bounces on the bat 13 which triggers the calculation of a new set of trajectories 37 to reach the new virtual waypoints 38 at the ceiling 22 and on the side wall 21.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

### REFERENCE NUMBERS

- 1: Drone or ball
- 2: Inner frame
- 3: Cage
- 4: Arm of the frame
- 5: Propeller
- 6: Computer systems
- 7: Positioning system
- 8: Navigation components
- 9: Onboard sensors
- 10: Processor
- 11: Motor controller
- 12: Computing device
- 13: Bat
- 14: Flexible inner core
- 15: Transparent outer shell
- 16: Electronic module
- 17: Bat handle
- 18: Arena
- 19: Boundaries
- 20: Floor
- 21: Side walls
- 22: Ceiling
- 23: First trajectory
- 24: First waypoint
- 25: Second trajectory
- 26: Second waypoint
- 27: Third trajectory
- 28: Third waypoint
- 29: Hybrid way point
- P: User
- 30: Fourth trajectory
- 31: First trajectory
- 32: First way point
- 33: Target trajectory
- 34: Target way point
- 35: Initial set of trajectories
- 36: Initial virtual waypoints
- 37: New set of trajectories
- 38: New way points

## Claims

1. Method for operating a drone (1) navigating within an arena (18) delimited by boundaries (19), the navigation of the drone (1) in the arena (18) being ruled by a navigation program setting the navigation parameters of the drone (1) to ensure the drone (1) follows a calculated trajectory,
the method comprising a step of setting the navigation program to adapt the navigation parameters of the drone (1) to an impact between the drone (1) and an object placed in the arena (18),
the method being **characterized in that** the setting of the navigation parameters of the drone (1) in the navigation program depends on the object impacting the drone (1),
the setting step comprising
implementing a virtual impact setup in the navigation program for adjusting the navigation parameters of the drone (1) to an impact between the drone (1) and a virtual object, and
implementing a real impact setup in the navigation program for adjusting the navigation parameters of the drone (1) to an impact between the drone and a physical object (13).

2. Method according to claim 1, wherein the virtual impact setup comprises the steps of
- determining the position of said virtual object placed in the arena (18);
- calculating a trajectory set comprising several trajectories of the drone (1) within the arena (18) based on the position of the drone (1) relative to the position of said virtual object;
- displacing the drone (1) in the arena to follow any one of the trajectories of the trajectory set;

3. Method according to claims 1 or 2, wherein virtual impact setup comprises the steps of
- calculating a waypoint target as the point where the trajectory of the drone (1) crosses the position of a virtual object;
- adapting the navigation parameters of the drone (1) progressively while the drone (1) is approaching the waypoint target to stop the drone (1) at the waypoint target and fly away from the virtual object at the waypoint;

4. Method according to any one of claims 1 to 3, wherein the real impact setup comprises the steps of
- stabilizing the drone (1) after the impact with the physical object (13);
- computing a new trajectory defined by the direction of an impact vector of the physical object (13);
- adapting the navigation parameters of the drone (1) to stabilize the drone (1) into the new trajectory so that the drone (1) is displaced along said new trajectory;

5. Method according to any one of claims 1 to 4, wherein the setting step comprising implementing a hybrid impact setup in the navigation program for adjusting the navigation parameters of the drone (1) when the object impacting the drone (1) is a physical object whose position is predetermined, the hybrid mode comprising the step of
- calculating a hybrid way point target as the point where the trajectory of the drone (1) crosses the position of the physical object;
- calculating a pre impact orientation and a post impact orientation of the drone depending on the physical forces exerted on the drone upon impact with the physical object, so that upon impact with the physical object the physical forces exerted on the drone (1) will rotate the drone from the pre impact orientation into a post impact orientation;
- adapting the navigation parameters of the drone (1) progressively while the drone (1) is approaching the hybrid waypoint target to position the drone (1) into the pre impact orientation;

6. Method according to any one of claims 1 to 5, wherein the setting step comprises implementing the virtual impact setup after each impact between the drone (1) and a physical object (13).

7. Method according to any one of claims 1 to 6, wherein the virtual objects are chosen among virtual boundaries of the arena, virtual drones, virtual obstacles, and computer-generated virtual opponents.

8. Method according to any one of claims 1 to 7, wherein the physical objects are chosen among physical boundaries of the arena such as wall, drones, batting accessories (13) configured for striking a drone, the players themselves, and physical obstacles placed in the arena.

9. Computer program, preferably a drone navigation program, comprising instructions which, when the program is executed by a computer, cause the computer to carry out the method according to any one of claims 1 to 8.

10. Computer system, for instance a computer processing unit, comprising means for carrying out the method of according to any one of claims 1 to 8.

11. System comprising a drone (1) configured for navigating in an arena (18) delimited by boundaries (19) and a batting instrument (13) configured for hitting the drone (1), the navigation of the drone (1) in the arena (18) being ruled by the navigation parameters of the drone (1) to ensure the drone (1) follows a calculated trajectory,
**characterized in that** the system further comprising
a computer system (6) configured for setting the navigation parameters of the drone (1) when an impact occurs between the drone (1) and an object placed in the arena (18),
the computer system (6) being configured for setting of the navigation parameters of the drone (1) according to a determined setup depending on the object impacting the drone,
the determined setup being chosen among
a virtual impact setup to adjust the navigation parameters of the drone (1) to an impact between the drone (1) and a virtual object, and
a real impact setup to adjust the navigation parameters of the drone (1) to an impact between the drone (1) and a physical object,
said real impact setup comprising a batting instrument (13) setup to adjust the navigation parameters of the drone (1) to an impact between the drone and the batting instrument (13).

12. System according to claim 11, wherein the drone (1) further comprises a motion module controlling the displacement of the drone (1) in the arena (18), the computer system is configured for commanding the motion module and setting the navigation parameters of the drone (1) depending on the operating mode.

13. System according to claims 11 or 12, wherein the drone (1) is mounted in a cage (3) to protect the drone (1) upon impact with the physical object or with the batting accessory (13).

14. System according to any one of claim 11 to 13, wherein the batting accessory (13) comprises a flexible portion (14) configured for being deformable in a reversible manner upon impact with the drone (1).

15. System according to any one of claims 11 to 14, wherein the batting accessory (13) comprises an electronic module (16) configured for track the movements of the batting accessory (13).

## Patentansprüche

1. Verfahren zum Betreiben einer Drohne (1), die in einer durch Grenzen (19) abgegrenzten Arena (18) navigiert, wobei die Navigation der Drohne (1) in der Arena (18) durch ein Navigationsprogramm geregelt wird, das die Navigationsparameter der Drohne (1) festlegt, um sicherzustellen, dass die Drohne (1) einer berechneten Trajektorie folgt,
wobei das Verfahren einen Schritt zur Einstellung des Navigationsprogramms umfasst, um die Navigationsparameter der Drohne (1) an einen Aufprall zwischen der Drohne (1) und einem in der Arena (18) platzierten Objekt anzupassen,
wobei das Verfahren **dadurch gekennzeichnet ist, dass** die Einstellung der Navigationsparameter der Drohne (1) im Navigationsprogramm vom Objekt abhängt, das die Drohne (1) trifft,
wobei der Einstellschritt umfasst:
- Implementieren einer virtuellen Aufprallkonfiguration im Navigationsprogramm, um die Navigationsparameter der Drohne (1) an einen Aufprall zwischen der Drohne (1) und einem virtuellen Objekt anzupassen, und
- Implementieren einer realen Aufprallkonfiguration im Navigationsprogramm, um die Navigationsparameter der Drohne (1) an einen Aufprall zwischen der Drohne (1) und einem physischen Objekt (13) anzupassen.

2. Verfahren nach Anspruch 1, wobei die virtuelle Aufprallkonfiguration die Schritte umfasst:
- Bestimmen der Position des genannten virtuellen Objekts, das in der Arena (18) platziert ist;
- Berechnen eines Trajektoriensatz, das mehrere Trajektorien der Drohne (1) innerhalb der Arena (18) basierend auf der Position der Drohne (1) relativ zur Position des genannten virtuellen Objekts umfasst;
- Verschieben der Drohne (1) in der Arena, um einer der Trajektorien aus dem Trajektorien-Set zu folgen.

3. Verfahren nach den Ansprüchen 1 oder 2, wobei die virtuelle Aufprallkonfiguration die Schritte umfasst:
- Berechnen eines Wegpunktziels als den Punkt, an dem die Trajektorie der Drohne (1) die Position eines virtuellen Objekts kreuzt;
- Anpassung der Navigationsparameter der Drohne (1) progressiv, während sich die Drohne (1) dem Wegpunktziel nähert, um die Drohne (1) am Wegpunktziel zu stoppen und sich vom virtuellen Objekt am Wegpunkt zu entfernen.

4. Verfahren nach einem der Ansprüche 1 bis 3, wobei die reale Aufprallkonfiguration die Schritte umfasst:
- Stabilisierung der Drohne (1) nach dem Aufprall mit dem physischen Objekt (13);
- Berechnung einer neuen Trajektorie, die durch die Richtung eines Aufprallvektors des physischen Objekts (13) definiert ist;
- Anpassung der Navigationsparameter der Drohne (1), um die Drohne (1) in die neue Trajektorie zu stabilisieren, sodass die Drohne (1) entlang der genannten neuen Trajektorie bewegt wird.

5. Verfahren nach einem der Ansprüche 1 bis 4, wobei der Einstellschritt das Implementieren einer hybriden Aufprallkonfiguration im Navigationsprogramm umfasst, um die Navigationsparameter der Drohne (1) anzupassen, wenn das Objekt, das die Drohne (1) trifft, ein physisches Objekt ist, dessen Position vorbestimmt ist. Der Hybridmodus umfasst den Schritt:
- Berechnung eines hybriden Wegpunktziels als den Punkt, an dem die Trajektorie der Drohne (1) die Position des physischen Objekts kreuzt;
- Berechnung einer Vor-Aufprall-Orientierung und einer Nach-Aufprall-Orientierung der Drohne basierend auf den physikalischen Kräften, die auf die Drohne beim Aufprall mit dem physischen Objekt wirken, sodass die physikalischen Kräfte auf die Drohne (1) beim Aufprall die Drohne von der Vor-Aufprall-Orientierung in eine Nach-Aufprall-Orientierung drehen;
- Anpassung der Navigationsparameter der Drohne (1) progressiv, während sich die Drohne (1) dem hybriden Wegpunktziel nähert, um die Drohne (1) in die Vor-Aufprall-Orientierung zu positionieren.

6. Verfahren nach einem der Ansprüche 1 bis 5, wobei der Einstellschritt das Implementieren der virtuellen Aufprallkonfiguration nach jedem Aufprall zwischen der Drohne (1) und einem physischen Objekt (13) umfasst.

7. Verfahren nach einem der Ansprüche 1 bis 6, wobei die virtuellen Objekte aus virtuellen Grenzen der Arena, virtuellen Drohnen, virtuellen Hindernissen und computergenerierten virtuellen Gegnern ausgewählt werden.

8. Verfahren nach einem der Ansprüche 1 bis 7, wobei die physischen Objekte aus physischen Grenzen der Arena, wie eine Wand, Drohnen, Schlagzubehör (13), das zum Schlagen einer Drohne konfiguriert ist, die Spieler selbst und in der Arena platzierte physische Hindernisse ausgewählt werden.

9. Computerprogramm, vorzugsweise ein Drohnen-Navigationsprogramm, das Anweisungen enthält, die, wenn das Programm von einem Computer ausgeführt wird, den Computer dazu veranlassen, das Verfahren nach einem der Ansprüche 1 bis 8 auszuführen.

10. Computersystem, beispielsweise eine Recheneinheit, das Mittel zum Ausführen des Verfahrens nach einem der Ansprüche 1 bis 8 umfasst.

11. System, das eine Drohne (1) umfasst, die für die Navigation in einer durch Grenzen (19) abgegrenzten Arena (18) konfiguriert ist, und ein Schlaginstrument (13), das zum Schlagen der Drohne (1) konfiguriert ist, wobei die Navigation der Drohne (1) in der Arena (18) durch die Navigationsparameter der Drohne (1) geregelt wird, um sicherzustellen, dass die Drohne (1) einer berechneten Trajektorie folgt,
**dadurch gekennzeichnet, dass** das System weiterhin umfasst:
- ein Computersystem (6), das dafür konfiguriert ist, die Navigationsparameter der Drohne (1) festzulegen, wenn ein Aufprall zwischen der Drohne (1) und einem in der Arena (18) platzierten Objekt auftritt;
- das Computersystem (6) ist dafür konfiguriert, die Navigationsparameter der Drohne (1) gemäß einer bestimmten Konfiguration einzustellen, abhängig von dem Objekt, das die Drohne trifft;
- die bestimmte Konfiguration wird ausgewählt aus einer virtuellen Aufprallkonfiguration, um die Navigationsparameter der Drohne (1) an einen Aufprall zwischen der Drohne (1) und einem virtuellen Objekt anzupassen, und einer realen Aufprallkonfiguration, um die Navigationsparameter der Drohne (1) an einen Aufprall zwischen der Drohne (1) und einem physischen Objekt anzupassen;
- die genannte reale Aufprallkonfiguration umfasst ein Schlaginstrument (13), das so eingerichtet ist, die Navigationsparameter der Drohne (1) an einen Aufprall zwischen der Drohne und dem Schlaginstrument (13) anzupassen.

12. System nach Anspruch 11, wobei die Drohne (1) ferner ein Bewegungsmodul umfasst, das die Bewegung der Drohne (1) in der Arena (18) steuert, und das Computersystem dafür konfiguriert ist, das Bewegungsmodul zu steuern und die Navigationsparameter der Drohne (1) abhängig vom Betriebsmodus einzustellen.

13. System nach den Ansprüchen 11 oder 12, wobei die Drohne (1) in einem Käfig (3) montiert ist, um die Drohne (1) beim Aufprall mit dem physischen Objekt oder mit dem Schlagzubehör (13) zu schützen.

14. System nach einem der Ansprüche 11 bis 13, wobei das Schlagzubehör (13) einen flexiblen Teil (14) umfasst, der so konfiguriert ist, dass er bei einem Aufprall mit der Drohne (1) reversibel verformbar ist.

15. System nach einem der Ansprüche 11 bis 14, wobei das Schlagzubehör (13) ein elektronisches Modul (16) umfasst, das dafür konfiguriert ist, die Bewegungen des Schlagzubehörs (13) zu verfolgen.

## Revendications

1. Procédé de pilotage d'un drone (1) naviguant dans une arène (18) délimitée par des frontières (19), la navigation du drone (1) dans l'arène (18) étant régie par un programme de navigation fixant les paramètres de navigation du drone (1) pour assurer que le drone (1) suive une trajectoire calculée,
le procédé comprenant une étape de paramétrage du programme de navigation pour adapter les paramètres de navigation du drone (1) à un impact entre le drone (1) et un objet placé dans l'arène (18),
le procédé étant **caractérisé en ce que** le réglage des paramètres de navigation du drone (1) dans le programme de navigation dépend de l'objet impactant le drone (1),
l'étape de réglage comprenant
mettre en oeuvre une configuration d'impact virtuelle dans le programme de navigation pour ajuster les paramètres de navigation du drone (1) à un impact entre le drone (1) et un objet virtuel, et
mettre en oeuvre une configuration d'impact réel dans le programme de navigation pour ajuster les paramètres de navigation du drone (1) à un impact entre le drone et un objet physique (13).

2. Procédé selon la revendication 1, dans lequel la configuration d'impact virtuel comprend les étapes consistant à
- déterminer la position dudit objet virtuel placé dans l'arène (18) ;
- calculer un ensemble de trajectoires comprenant plusieurs trajectoires du drone (1) au sein de l'arène (18) en fonction de la position du drone (1) par rapport à la position dudit objet virtuel ;
- déplacer le drone (1) dans l'arène pour suivre l'une quelconque des trajectoires de l'ensemble de trajectoires ;

3. Procédé selon les revendications 1 ou 2, dans lequel la configuration d'impact virtuel comprend les étapes consistant à
- calculer une cible de point de cheminement comme le point où la trajectoire du drone (1) croise la position d'un objet virtuel ;
- adapter les paramètres de navigation du drone (1) progressivement pendant que le drone (1) s'approche de la cible du point de cheminement pour arrêter le drone (1) au niveau de la cible du point de cheminement et s'éloigner de l'objet virtuel au niveau du point de cheminement ;

4. Procédé selon l'une quelconque des revendications 1 à 3, dans lequel la configuration d'impact réelle comprend les étapes consistant à
- stabiliser le drone (1) après l'impact avec l'objet physique (13) ;
- calculer une nouvelle trajectoire définie par la direction d'un vecteur d'impact de l'objet physique (13) ;
- adapter les paramètres de navigation du drone (1) pour stabiliser le drone (1) dans la nouvelle trajectoire de sorte que le drone (1) se déplace le long de ladite nouvelle trajectoire ;

5. Procédé selon l'une quelconque des revendications 1 à 4, dans lequel l'étape de réglage comprenant la mise en oeuvre d'un réglage d'impact hybride dans le programme de navigation pour ajuster les paramètres de navigation du drone (1) lorsque l'objet impactant le drone (1) est un objet physique dont la position est prédéterminée, le mode hybride comprenant l'étape de
- calculer une cible de point de cheminement hybride comme le point où la trajectoire du drone (1) croise la position de l'objet physique ;
- calculer une orientation pré-impact et une orientation post-impact du drone en fonction des forces physiques exercées sur le drone lors de l'impact avec l'objet physique, de sorte que lors de l'impact avec l'objet physique, les forces physiques exercées sur le drone (1) feront tourner le drone de l'orientation pré-impact à une orientation post-impact ;
- adapter les paramètres de navigation du drone (1) progressivement pendant que le drone (1) s'approche de la cible de point de cheminement hybride pour positionner le drone (1) dans l'orientation d'avant l'impact ;

6. Procédé selon l'une quelconque des revendications 1 à 5, dans lequel l'étape de paramétrage comprend la mise en oeuvre du paramétrage d'impact virtuel après chaque impact entre le drone (1) et un objet physique (13).

7. Procédé selon l'une quelconque des revendications 1 à 6, dans lequel les objets virtuels sont choisis parmi des limites virtuelles de l'arène, des drones virtuels, des obstacles virtuels et des adversaires virtuels générés par ordinateur.

8. Procédé selon l'une quelconque des revendications 1 à 7, dans lequel les objets physiques sont choisis parmi des limites physiques de l'arène telles qu'un mur, des drones, des accessoires de frappe (13) configurés pour frapper un drone, les joueurs eux-mêmes et des obstacles physiques placés dans l'arène.

9. Programme informatique, de préférence un programme de navigation de drone, comprenant des instructions qui, lorsque le programme est exécuté par un ordinateur, amènent l'ordinateur à mettre en oeuvre le procédé selon l'une quelconque des revendications 1 à 8.

10. Système informatique, par exemple une unité de traitement informatique, comprenant des moyens pour mettre en oeuvre le procédé selon l'une quelconque des revendications 1 à 8.

11. Système comprenant un drone (1) configuré pour naviguer dans une arène (18) délimitée par des frontières (19) et un instrument de frappe (13) configuré pour frapper le drone (1), la navigation du drone (1) dans l'arène (18) étant régie par les paramètres de navigation du drone (1) pour assurer que le drone (1) suit une trajectoire calculée,
**caractérisé en ce que** le système comprend en outre
un système informatique (6) configuré pour régler les paramètres de navigation du drone (1) lorsqu'un impact se produit entre le drone (1) et un objet placé dans l'arène (18),
le système informatique (6) étant configuré pour régler les paramètres de navigation du drone (1) selon une configuration déterminée en fonction de l'objet impactant le drone,
la configuration déterminée étant choisie parmi
une configuration d'impact virtuelle pour ajuster les paramètres de navigation du drone (1) à un impact entre le drone (1) et un objet virtuel, et
une configuration d'impact réel pour ajuster les paramètres de navigation du drone (1) à un impact entre le drone (1) et un objet physique,
ladite configuration d'impact réel comprenant un instrument de frappe (13) configuré pour ajuster les paramètres de navigation du drone (1) à un impact entre le drone et l'instrument de frappe (13).

12. Système selon la revendication 11, dans lequel le drone (1) comprend en outre un module de mouvement commandant le déplacement du drone (1) dans l'arène (18), le système informatique est configuré pour commander le module de mouvement et régler les paramètres de navigation du drone (1) en fonction du mode de fonctionnement.

13. Système selon les revendications 11 ou 12, dans lequel le drone (1) est monté dans une cage (3) pour protéger le drone (1) lors de l'impact avec l'objet physique ou avec l'accessoire de frappe (13).

14. Système selon l'une quelconque des revendications 11 à 13, dans lequel l'accessoire de frappe (13) comprend une partie flexible (14) configurée pour être déformable de manière réversible lors de l'impact avec le drone (1).

15. Système selon l'une quelconque des revendications 11 à 14, dans lequel l'accessoire de frappe (13) comprend un module électronique (16) configuré pour suivre les mouvements de l'accessoire de frappe (13).
